(19) Europäisches Patentamt
European Patent Office
Office européen des brevets

(11) **EP 3 431 816 A1**

(12) **EUROPEAN PATENT APPLICATION**

(43) Date of publication:
**23.01.2019 Bulletin 2019/04**

(51) Int Cl.:
*F16H 21/36* (2006.01)    *F16H 29/04* (2006.01)
*B62M 15/00* (2006.01)

(21) Application number: **17182566.4**

(22) Date of filing: **21.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Haute ecole du paysage, d'ingenierie et d'architecture de geneve**
**1202 Geneve (CH)**

(72) Inventors:
• **GIRARDIN, Anthony**
  **74100 Ambilly (FR)**
• **BUSSARD, Sydney**
  **74160 Collonges-sous-Salève (FR)**
• **LUYET, Mathieu**
  **1247 Anières (CH)**

(74) Representative: **KATZAROV S.A.**
**European Patent Attorneys**
**12, Avenue des Morgines**
**1213 Petit-Lancy (CH)**

(54) **CONTINUOUSLY INFINITE VARIABLE TRANSMISSION SYSTEM**

(57) The present invention relates to an infinitely variable transmission system comprising Infinitely variable transmission system comprising a first movement transformation means for transforming a circular movement from an energy source into a linear reciprocating movement and comprising an hypocycloidal gear train including a ring gear and a single planet pinion, a second movement transformation means for transforming the linear reciprocating movement into an oscillating movement comprising a sliding shaft slidably mounted on a pivot on one end and attached to the planet pinion on the other end so as to link the planet pinion to said pivot, and a ring gear angular position controller adapted for reversibly moving the ring gear position according to a rotation about its center axis, wherein the planet pinion is connected to the sliding shaft through an eccentric intermediary element so as to provide a fixing point located on a primitive diameter of the planet pinion thereby providing a linear reciprocating movement of the fixing point upon rotation of the planet pinion on the ring gear, and the linear reciprocating movement of the fixing point causes an oscillation of the sliding shaft within a pivotable sleeve mounted on the pivot so as to provide an oscillating back-and-forth pivoting movement to the pivot, and further comprises a ring gear angular position controller is adapted to move the ring gear such that the inclination of the linear reciprocating movement of the fixing point may be varied by 90° between a linear reciprocating movement perpendicular to the oscillating movement and a linear reciprocating movement parallel to the oscillating movement.

Figure 1A

EP 3 431 816 A1

## Description

## Technical Field

The present invention relates to a continuously variable transmission system and more particularly to continuously infinite variable transmission system providing an improved torque transmission yield or efficiency.

## Background of the art

Today, in the sector of transport vehicles manufacturing, the solution for adapting the speed and torque of the engine device used to the speed and torque used in the wheels or output of the vehicle uses different transmission systems that incorporate systems with changes in the transmission or gear change ratio, in order to adapt the transmitted torque of the device to different load and terrain characteristics by means of the different transmission ratios.

On one hand, there are transmissions or gear boxes with a specific number of transmission ratios, the actuation of which may be manual or automatic. These fixed ratio transmissions, regardless of whether they are manual or automatic, include a discrete number of transmission ratios or gears.

On the other hand, there are transmission systems with continuously variable transmission ratio between the input and the output. In comparison with conventional transmissions, in a continuously variable transmission or CVT, the transmission ratio between the input and output shafts may be progressively varied in a specific interval of possible ratios. The possibility of incorporating a limited number of transmission ratios provides an added parameter in order to optimize one or several variables of the vehicle. This way, with a specific variation in the transmission ratio, we can achieve conditions of high power, low consumption or a compromised ratio between both variables. These are mostly desirable for more precise adaptation to different load circumstances and power availability of the system. In addition, they enable maximum variation smoothness between the margins of available transmission ratios.

The actual thermal engines have a best yield range which is reduced whereas the needs tend having a large working range. The best way to overcome this situation is to use a continuously variable transmission with high ratio between the lowest ratio and the highest ratio. The aforementioned continuous gear change systems may be used for many types of transport vehicles as an alternative to change systems with a specific number of transmission or speed ratios. Continuous gear changes enable the transmission ratio thereof to change continuously and the ratio variation may be manual or automatic. Specifically for the use thereof in very light transport vehicles, the need to have another type of these continuous transmission ratio change systems, which are economic, simple to use and automatic, is considered.

The continuous changes in transmission ratio that are currently known are mainly of the following type:

- Those commonly referred to as CVT, where two adjustable opening pulleys are connected via a belt or chain that is adapted to the step variations thereof. This type has been applied to many cars and other vehicles.
- Several systems where two discs, one driving and another driven, are connected by an assembly of intermediate elements, the position adjustment of which varies the rolling radii of the connected discs and, therefore, the transmission ratio thereof.
- Epicyclic gear train systems, where the adjustment of the relative rotation of a planet and sun gear assembly determines the adjustment of the transmission ratio.
- Oscillating drive transmission systems, where a back-and-forth push on a lever arm, the shaft of which is connected to a freewheel system, transforms into a continuous rotation, in this system, in order to vary the transmission ratio it is possible to adjust the work distance of the lever arm.
- Systems where the connection between the input and output is carried out periodically, using the moments of coincidence of torque requirements.

However, the different systems used previously have shown several drawbacks such as a very low yield and limited torque because of friction between the different components and lower gearbox range than a conventional automatic transmission.

In this regard, a primary object of the invention is to solve the above-mentioned problems and more particularly to provide a continuously variable transmission overcoming the above drawbacks and more specifically having a large range tending to infinite such that it can generate a velocity which is null while receiving a velocity in entry.

Another object of the invention it to provide a continuously variable transmission providing a high yield and a high torque with no clutch.

Another object of the invention it to provide a continuously variable transmission gearbox providing a sinusoidal exit velocity so as to adjust it to the dead centers of the energy source.

A traditional gearbox uses sprockets which have the advantage of having a good efficiency, high torque transmissible, a large opening but a number of discrete ratios. This is why a gearbox with continuous variation using sprockets has been developed in order to combine the advantages of each type of gearbox.

## Summary of the invention

The above problems are solved by the present invention.

A first aspect of the invention is an infinitely variable transmission system comprising a first movement transformation means for transforming a circular movement from an energy source into a linear reciprocating movement and comprising an hypocycloidal gear train including a ring gear and a single planet pinion, a second movement transformation means for transforming the linear reciprocating movement into an oscillating movement comprising a sliding shaft slidably mounted on a pivot on one end and rotatably attached to the planet pinion on the other end so as to link the planet pinion to said pivot, and a ring gear angular position controller adapted for reversibly moving the ring gear position according to a rotation about its center axis, wherein the planet pinion is connected to the sliding shaft through an eccentric intermediary element so as to provide a fixing point located on a primitive diameter of the planet pinion thereby providing a linear reciprocating movement of the fixing point upon rotation of the planet pinion on the ring gear, and the linear reciprocating movement of the fixing point causes an oscillation of the sliding shaft within a pivotable sleeve mounted on the pivot so as to provide an oscillating pivoting movement to the pivot, and further comprising a ring gear angular position controller adapted to move the ring gear such that the inclination of the linear reciprocating movement of the fixing point may be varied by 90° between a linear reciprocating movement perpendicular to the oscillating movement and a linear reciprocating movement parallel to the oscillating movement. Thanks to this we obtain a continuously variable transmission having a large range tending to infinite such that it can generate a velocity which is null while receiving a velocity in entry

According to a preferred embodiment of the present invention, the planet pinion has half the teeth of the ring gear. This embodiment is particularly adapted for having a proper reciprocating movement.

Advantageously, the eccentric element comprises an eccentric linking piece mounted on a planet carrier so as to connect the planet pinion to the fixing point. In this manner, the rotation movement of the planet pinion is easily transformed into a linear reciprocating movement.

Preferably, the infinitely variable transmission system further comprises a full wave rectifier downstream the pivot. Thus, the entire movement can be recuperated instead of the half of it only.

According to a preferred embodiment of the present invention, the full wave rectifier comprises a free wheel system comprising two free wheels axially aligned. This embodiment is particularly adapted for obtaining a very simple rectifier easy to fabricate.

Preferably, the infinitely variable transmission system comprises a speed accelerating gear upstream/downstream to the first/second movement transformation means. In this manner, this permits to reduce the negative portions of the produced torque and therefore to shorten the duration between each pulse and to lower the torque within the IVT system so as to diminish the sizes of the components and therefore their weight.

Advantageously, the ring gear angular position controller is a worm screw system. Thus, the ring gear angular position can be easily modified.

According to a preferred embodiment of the present invention, the infinitely variable transmission system further comprises a carter housing at least the first and second movement transformation means. This embodiment is particularly adapted for a mounting on a vehicle offering no protection such as a bicycle.

A second aspect of the invention is a gearbox comprising at least two infinitely variable transmission systems according to the first aspect of the invention mounted in parallel and which are out of phase so as to lower the top dead center and the bottom dead center. This permits to obtain an improved torque output frequency as well as an improved crankset velocity.

A third aspect of the invention is a vehicle comprising the infinitely variable transmission system according to the first aspect of the invention or the Gearbox according to the second aspect of the invention wherein the first movement transformation means is connected to an energy source. The particular advantages of this device of the invention being similar to the ones of the method of the first aspect of the invention, they will not be repeated here.

Preferably, the energy source is provided by a crankset. In this manner, it provides a rotational movement in entrance of the transmission.

Advantageously, the pivot is linked to a chain wheel driving the wheels through a driving shaft.

According to a preferred embodiment of the present invention, the rectifier in integrated in a hub of at least one of the driving wheels. This embodiment is particularly adapted for a bicycle.

## Brief description of the drawings

Further particular advantages and features of the invention will become more apparent from the following non-limitative description of at least one embodiment of the invention which will refer to the accompanying drawings, wherein

- Figures 1A and 1B represent two different views of the infinitely variable transmission system of the present invention;
- Figure 2A is a schematic diagram representing the cinematic of the infinitely variable transmission system of the present invention;
- Figure 2B is a schematic diagram representing the cinematic of the infinitely variable transmission system connected to a full wave rectifier according to a first embodiment of the invention through a chain;
- Figure 2C is a schematic diagram representing the cinematic of the infinitely variable transmission system connected to of full wave rectifier according to a first embodiment of the invention through an elastic coupling;

- Figure 2D is a schematic diagram representing the cinematic of the infinitely variable transmission system connected to a full wave rectifier according to a second embodiment of the invention through an elastic coupling;

- Figures 3A and 3B schematically represent an isometric and an exploded view of a full wave rectifier according to a first embodiment of the present invention;

- Figure 4A is a schematic diagram representing the cinematic of the full wave rectifier according to a first embodiment of the invention;

- Figure 4B is a schematic diagram representing the cinematic of the full wave rectifier according to a second embodiment of the invention;

- Figures 5A and 5B shows experimental diagrams representing the crankset velocity equipped with an IVT system of the present invention and a gearbox comprising at least two IVT systems of the present invention, respectively.

- Figures 6A and 6B shows experimental diagrams representing the torque transmitted by an IVT system of the present invention and a gearbox comprising at least two IVT systems of the present invention, respectively.

## Detailed description of the invention

The present detailed description is intended to illustrate the invention in a non-limitative manner since any feature of an embodiment may be combined with any other feature of a different embodiment in an advantageous manner.

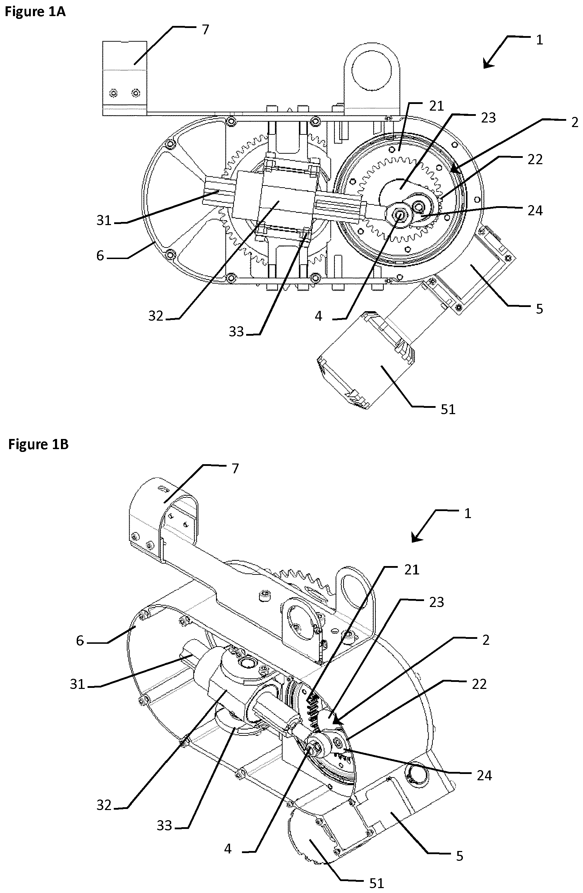

Figures 1A and 1B show the first aspect of the invention which is a continuously infinitely variable transmission system. The expression "infinitely variable transmission" relates to a mechanical system permitting a continuous gear transmission with a gear ratio, which corresponds to the entering rotation frequency divided by the exiting rotation frequency as shown in the below equation (1):

$$k = \eta_{entry} / \eta_{exit} \quad (1)$$

can be considered as infinite, i.e. the exiting rotation frequency $\eta_{exit}$ tends to zero or is null independently of the entering rotation frequency.

According to the first aspect of the invention as shown in these figures 1A and 1B, the infinitely variable transmission (IVT) system 1 of the present invention comprises a first movement transformation means 2 for transforming a circular movement from an energy source provided by a drive system, such as a bicycle drive represented by the entry pivot 65, into a linear reciprocating movement. This first movement transformation means 2 comprises a hypocycloidal gear train including a ring gear 21 and a single planet pinion 23 having half the teeth of the ring gear.

The IVT system 1 also comprises a second movement transformation means 3 for transforming the linear reciprocating movement into an oscillating movement. The second movement transformation 3 means comprises a sliding shaft 31 slidably mounted on a sliding sleeve 32 securely fixed to a pivot 33, on one end, said pivot being then directly or indirectly connected to an output shaft, and the sliding shaft 31 being rotatably attached to the planet pinion 23 of the hypocycloidal gear train 2 on the other end so as to link the planet pinion 23 to the pivot 33. Preferably, the system 1 is entirely or partially housed in a carter 6 housing at least the first and second movement transformation means 2, 3.

The planet pinion 23 in the present invention is connected to the sliding shaft 31 through an eccentric intermediary linking element 24 and to the ring gear through a planet carrier 23. The eccentric linking piece 24 is mounted on the planet carrier 22 so as to connect the planet pinion 23 to a fixing point 4 which is located on a primitive diameter of the planet pinion 23 thereby providing a linear reciprocating movement of the fixing point 4 upon rotation of the planet pinion 23 on the ring gear 21.

The linear reciprocating movement of the fixing point 4 causes an oscillation of the sliding shaft 31 to which it is fixed within the pivotable sleeve 32 mounted on the pivot 33 so as to provide a oscillating, possibly pivoting movement to the pivot 33 and the output shaft which then exits the movement frequency outside the system 1 to the wheels directly or indirectly.

One of the key features of the system is the presence of a ring gear angular position controller 5, 51 which actually provides the continuously variable transmission feature to the system.

The ring gear angular position controller 5, 51 is adapted to reversibly move the ring gear 21 position according to a rotation about its center axis. According to a preferred embodiment, one uses a worm screw system 5 which is geared with an outer surface of the ring gear 21 to move the ring gear 21 clockwise or counterclockwise and a possible motor 51 controlling the worm gear 5, said motor 51 being controlled by a remote control means like a gear transmission controller on the handlebar of a bike, for example.

Such an angular position modification of the ring gear 21 thereby modifies the inclination of the linear reciprocating movement of the fixing point 4. Preferably, this inclination may be varied by 90° from a first inclination where the linear reciprocating movement is perpendicular to the oscillating movement of the sliding shaft 31 which causes maximum pivoting of the pivot 33, to a second inclination where the linear reciprocating movement is parallel to the oscillating movement of the sliding shaft 31 which causes the sliding shaft to oscillate within the sliding sleeve 32 without any pivoting of the pivot thereby providing the "infinite" ratio discussed above. Thanks to this it is possible to continuously and in real time choose the optimal transmission gear to the actual velocity.

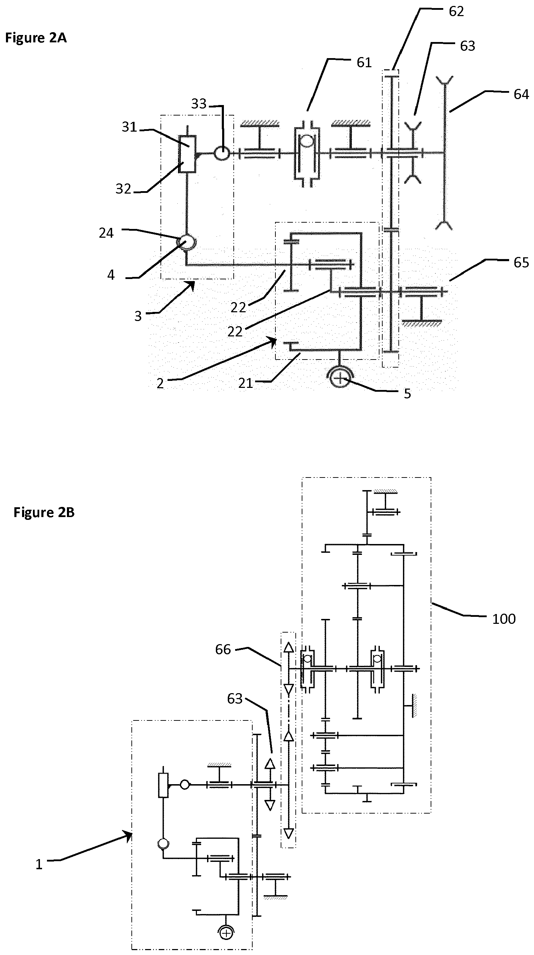

As a matter of fact, since the pivot movement is a back and forth oscillating movement, the negative movement has first at least to be cancelled, through a free wheel 61 as shown in figure 2A, for example.

According to a preferred embodiment, it is however preferred not to cancel the negative movement but to transform it into a positive one through the use of a rectifier, preferably a full wave rectifier 100, 100', downstream the pivot 33 so as to rectify the alternative movement, into a continuous movement.

Finally, figures 1A and 1B shows a particular embodiment where the housing is attached to an attaching means 7 which permits attaching the system 1 to a bicycle for example. According to other embodiment, this attaching means can be omitted and the entire system can embodied within the vehicle structure such as a hub.

Figure 2A shows a schematic diagram representing the cinematic of the infinitely variable transmission system 1 described above where, in addition to the aforementioned components, one can see the presence of a half wave rectifier such as a single free wheel system 61 to have the negative portion of the oscillation cancelled as well as a speed increasing gear 62, a torque entry 63 and a torque exit 64.

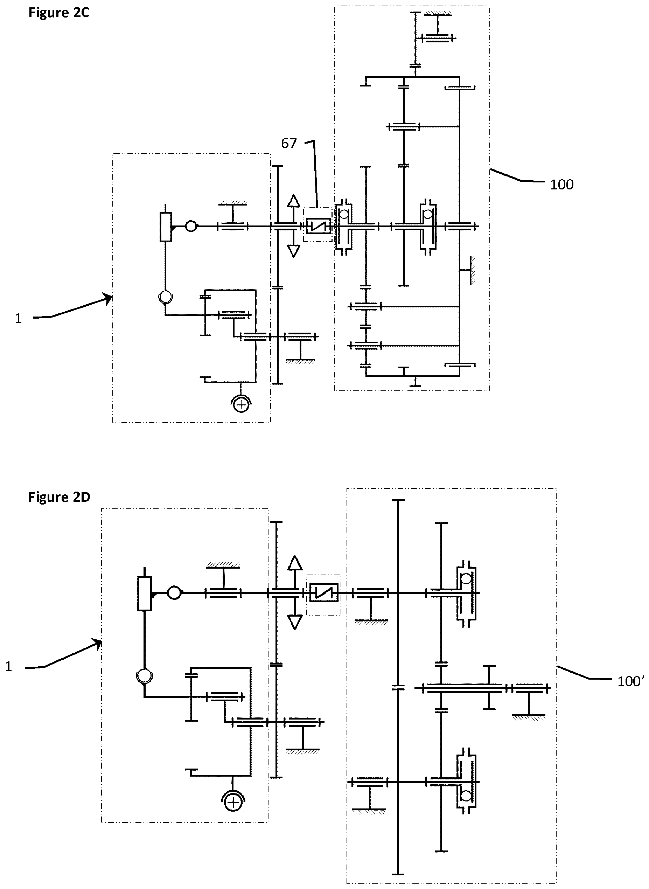

Figures 2B and 2C are schematic diagrams representing the cinematic of two different mounting options of the infinitely variable transmission system 1 when connected to a full wave rectifier 100, 100' according to a first and a second embodiment respectively. In figure 2B the IVT system is connected to the rectifier 100 through a chain 66 when for example the rectifier 100 is installed in the wheel hub, whereas in figure 2C the infinitely variable transmission system 1 is connected to the full wave rectifier 100 through an elastic coupling elements 67 when for example the rectifier 100 is installed just downstream the pivot 33.

Figure 2D shows a schematic diagram representing the same cinematic as in figure 2C but with a different rectifier 100' according to a second embodiment of the invention. This rectifier differs from the first one in that it has no free wheels disposed coaxially and comprises a plurality of sprockets enabling to rectify the speed without the need of any ring gear nor any planet carrier though.

In the alternative embodiment which is represented in figure 2A, the half wave rectifier (the single free wheel) 61 is provided downstream the pivot 33 and the full wave rectifier 100, 100' becomes optional thanks to the use of a speed accelerating gear 62 upstream to the first movement transformation means 2/downstream to the second movement transformation means 3, i.e. upstream to the ring gear 21/downstream the output shaft. In this embodiment, one obtains a rotation speed which is higher according to the speed accelerating ratio. Thus, the angular velocity pulses will bet closer and the time period during which the IVT has no torque will be shortened. Important to note that in this embodiment, the use of a half wave rectifier instead of a full wave rectifier requires to implement a speed reducing gear (not represented) at the exit 64 in order to recuperate a proper speed.

Figures 2B to 2D show the presence of this speed accelerating gear 62, however it is clear that in presence of the full wave rectifier 100, 100', it becomes optional. More particularly, this speed increasing gear appears on each figure however, it is less crucial when used with a full wave rectifier than when used with a half wave rectifier (single free wheel).

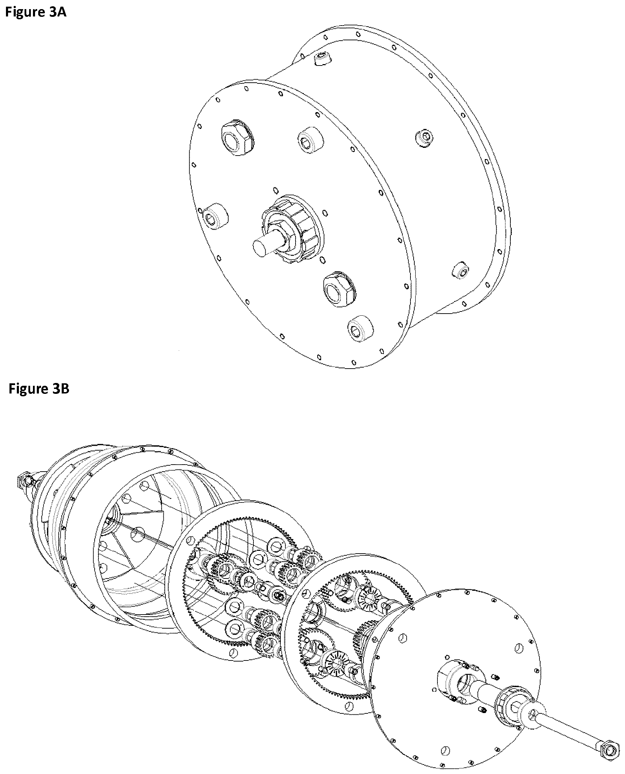

Figure 3A an isometric outer view of a preferred embodiment of the full wave rectifier of the present invention and figure 3B schematically represents the first embodiment of the rectifier where one can see that the rectifier comprises an epicyclical gear train associated to a first stage of Ravigneaux gear.

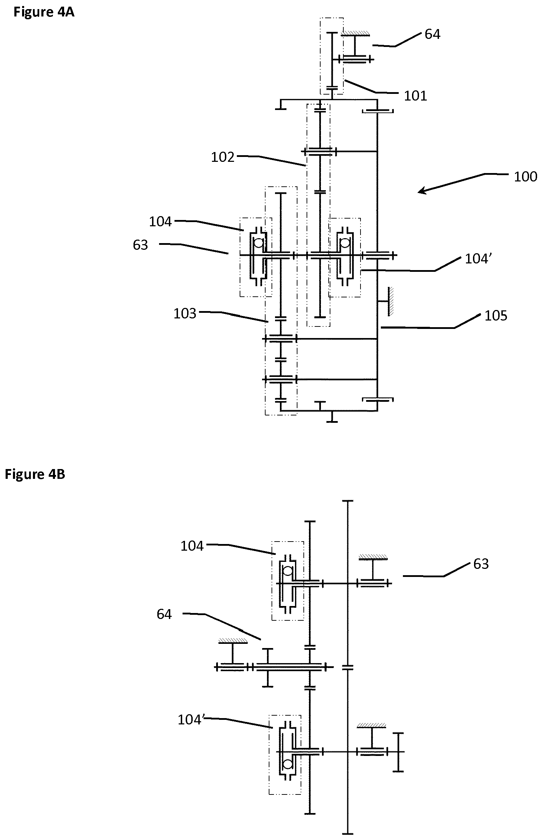

As one can see in figure 4A which schematically represents the cinematic of the preferred embodiment of the full wave rectifier 100 of the present invention, the rectifier comprises an epicyclical gear train 102 associated to a first stage of Ravigneaux gear set 103 as well as a speed accelerating gear 101 to compensate the speed reduction upstream in the rectifier. This figure also shows the two coaxial free wheels 104 and 103' as well as a fixed planet carrier 105. This system can rectify a velocity which means that the entering velocity has no impact on the exiting velocity which will always be in the same direction. Also, as represented in this figure, the full wave rectifier 100 comprises a free wheel system comprising two free wheels axially aligned. Further, they are mounted opposite to each other, this has the advantage that when the entry shaft rotates in one direction, it drives a single planetary which will in turn drive either a planet pinion or two planet pinions mounted in series to then attack the ring gear.

Figure 4B shows a second embodiment of the rectifier which differs from the first one in that it comprises less elements and is therefore easier to fabricate.

In these two figures, entry and output of the speed is represented by reference signs 63 and 64, respectively.

A second aspect of the invention relates to what is called a multibox which is a gearbox comprising several infinitely variable transmission systems of the present invention mounted in parallel and which are out of phase. The phase shift depends upon the number of mounted systems. For example, a gearbox with two IVT systems will be provided with a phase shift of 90°.

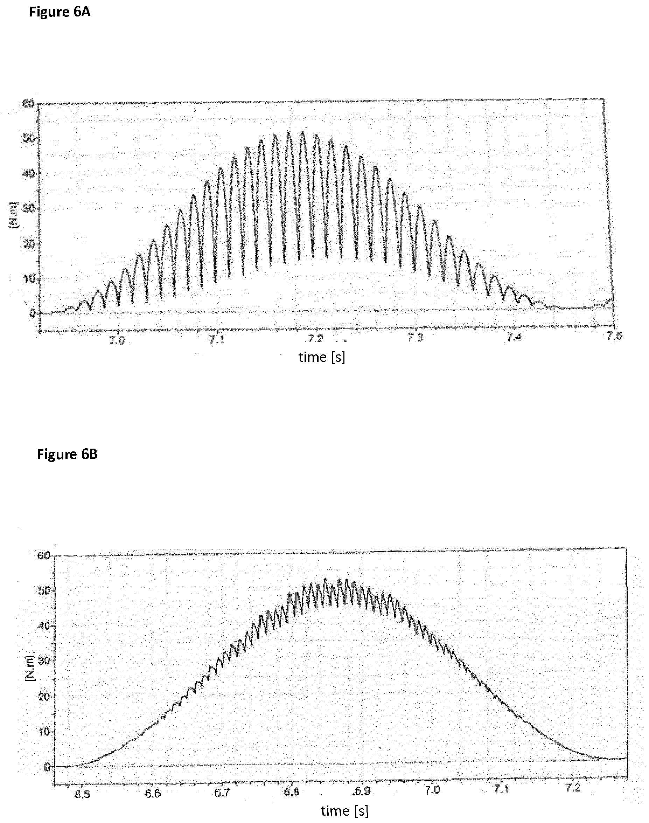

With this arrangement, it is possible to lower the top dead center and the bottom dead center and, like for a multi-cylinder motor engine, smoothen the torque variation with time. A simulation model obtained with a gearbox having two IVT systems phase-shifted by 90° and being equipped with a speed accelerating gear having ratio of 37.5 upstream was compared with a torque variation with a single system and is shown in figure 6A and 6B, respectively.

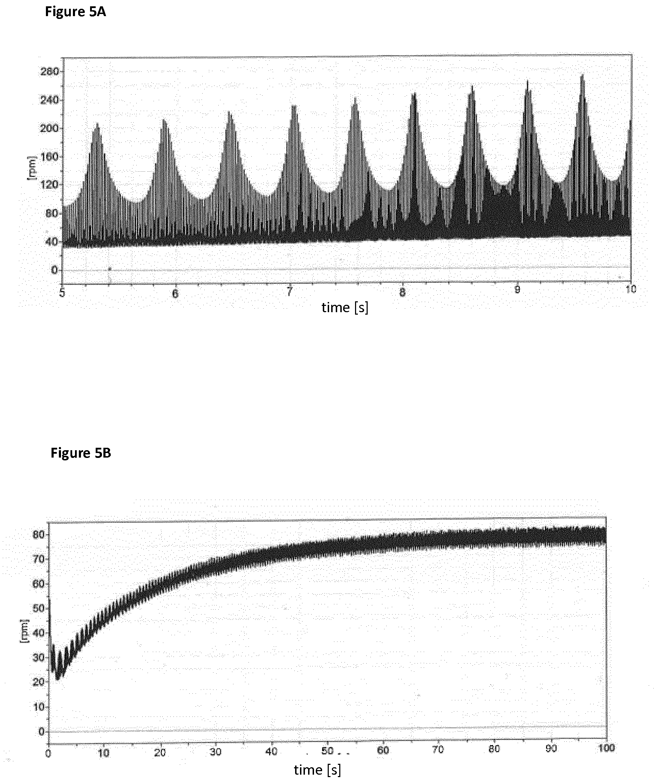

A further advantage of the same gearbox regards the crack cam angular velocity speed variation. As shown in figures 5A and 5B, the crack cam angular velocity speed variation which regularity is improved in an impressive manner by using the gearbox with two systems.

A third aspect of the invention relates to a vehicle comprising the infinitely variable transmission system according to the first aspect or the gearbox of the second aspect where the first movement transformation means is connected to an energy source which, in case of a bicycle, is provided by a crankset, and the pivot is linked to a chain wheel driving the wheels through a driving shaft.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

**Claims**

1. Infinitely variable transmission system (1) comprising

   a first movement transformation means (2) for transforming a circular movement from an energy source into a linear reciprocating movement and comprising an hypocycloidal gear train including a ring gear (21) and a single planet pinion (23),

   a second movement transformation means (3) for transforming the linear reciprocating movement into an oscillating movement comprising a sliding shaft (31) slidably mounted on a pivot (33) on one end and rotatably attached to the planet pinion (23) on the other end so as to link the planet pinion (23) to said pivot (33), and

   a ring gear angular position controller (5, 51) adapted for reversibly moving the ring gear position according to a rotation about its center axis.

   wherein

   the planet pinion (23) is connected to the sliding shaft (31) through an eccentric intermediary element (24) so as to provide a fixing point (4) located on a primitive diameter of the planet pinion (23) thereby providing a linear reciprocating movement of the fixing point (4) upon rotation of the planet pinion (23) on the ring gear (21), and

   the linear reciprocating movement of the fixing point (4) causes an oscillation of the sliding shaft (31) within a pivotable sleeve (32) mounted on the pivot (33) so as to provide an oscillating, possibly pivoting movement to the pivot (33), and **characterized in that**

   the ring gear angular position controller (5, 51) is adapted to move the ring gear (21) such that the inclination of the linear reciprocating movement of the fixing point (4) can be varied by 90° between a linear reciprocating movement perpendicular to the oscillating movement and a linear reciprocating movement parallel to the oscillating movement.

2. Infinitely variable transmission system according to claim 1, **characterized in that** the planet pinion (23) has half the teeth of the ring gear (21).

3. Infinitely variable transmission system according to any one of claims 1 or 2, **characterized in that** the eccentric element (24) is an eccentric linking piece mounted on a planet carrier (22) so as to connect the planet pinion (23) to the fixing point (4).

4. Infinitely variable transmission system to any one of claims 1 to 3, **characterized in that** it further comprises a full wave rectifier (100, 100') downstream the pivot (33).

5. Infinitely variable transmission system according to claim 4, **characterized in that** the full wave rectifier (100) comprises a free wheel system comprising two free wheels (104, 104') axially aligned.

6. Infinitely variable transmission system according to any one of claims 1 to 3, **characterized in that** it comprises a speed accelerating gear (62) upstream/downstream to the first/second movement transformation means (2, 3).

7. Infinitely variable transmission system according to any one of claims 1 to 6, **characterized in that** the ring gear angular position controller (5, 51) is a worm screw system.

8. Infinitely variable transmission system according to any one of claims 1 to 7, **characterized in that** it further comprises a carter (6) housing at least the first and second movement transformation means (2, 3).

9. Gearbox comprising at least two infinitely variable transmission systems (1) mounted in parallel and which are out of phase so as to lower the top dead center and the bottom dead center.

10. Vehicle comprising the infinitely variable transmission system according to any one of claims 1 to 9, **characterized in that** the first movement transformation means (2) is connected to an energy source.

11. Vehicle according to claim 10, **characterized in that** the energy source is provided by a crankset.

12. Vehicle according to claim 10 or 11, **characterized in that** the pivot is linked to a chain wheel (66) driving the wheels through a driving shaft.

13. Vehicle according to any one of claims 10 to 12, **characterized in that** the rectifier (100, 100') in integrated in a hub of at least one of the driving wheels.

14. Vehicle according to any one of claims 10 to 13, **characterized in that** it is a bicycle.

**Figure 1A**

**Figure 1B**

Figure 2A

Figure 2B

**Figure 2C**

**Figure 2D**

**Figure 3A**

**Figure 3B**

**Figure 4A**

**Figure 4B**

**Figure 5A**

**Figure 5B**

**Figure 6A**

**Figure 6B**

Europäisches
Patentamt

European
Patent Office

Office européen
des brevets

## EUROPEAN SEARCH REPORT

Application Number

EP 17 18 2566

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FRIEDMANN O ET AL: "The Crank-CVT", LUK KOLLOQ, LUK GMBH, DE, 12 April 2006 (2006-04-12), pages 89-98, XP007906219, * figures 4,5 * | 1-14 | INV. F16H21/36 F16H29/04 B62M15/00 |
| A | FR 2 984 957 A1 (PEUGEOT CITROEN AUTOMOBILES SA [FR]) 28 June 2013 (2013-06-28) * figures 1-10 * | 1-14 | |

TECHNICAL FIELDS
SEARCHED      (IPC)

F16H
B62M

The present search report has been drawn up for all claims

| Place of search | Date of completion of the search | Examiner |
|---|---|---|
| Munich | 15 January 2018 | Belz, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 18 2566

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2018

| Patent document cited in search report | | Publication date | Patent family member(s) | Publication date |
|---|---|---|---|---|
| FR 2984957 | A1 | 28-06-2013 | NONE | |